# EUROPÄISCHE PATENTSCHRIFT

(11) **EP 2 132 464 B1**
(45) Veröffentlichungstag und Bekanntmachung des Hinweises auf die Patenterteilung: **20.10.2010**
(21) Anmeldenummer: 08709033.8
(22) Anmeldetag: 15.02.2008
(51) Int. Cl.: F16H 63/18

(54) **SCHALTWALZE**
CONTROLLER DRUM
BARILLET DE SÉLECTION

(30) Priorität: 08.03.2007 DE 102007011281
(43) Veröffentlichungstag der Anmeldung: 16.12.2009
(73) Patentinhaber: Schaeffler Technologies GmbH & Co. KG, 91074 Herzogenaurach (DE)
(72) Erfinder: MAIER, Waldemar, 91074 Herzogenaurach (DE); STANCIU, Ioan, 90542 Eckental (DE)
(86) Internationale Anmeldenummer: PCT/EP2008/051851
(87) Internationale Veröffentlichungsnummer: WO 2008/107290

(56) Entgegenhaltungen:
- EP-A- 1 225 375
- EP-A- 1 350 991
- EP-A- 1 388 689
- DE-A1- 19 528 460
- DE-A1- 19 645 791
- DE-A1- 19 727 569
- DE-A1- 19 924 335
- DE-A1-102006 003 133
- DE-C- 950 433
- FR-A- 2 796 696

## Beschreibung

Die Erfindung betrifft eine Schaltwalze für eine Schaltvorrichtung eines Kraftfahrzeugzahnräderwechselgetriebes gemäß dem Oberbegriff des Anspruchs 1 und ein dazugehöriges Herstellungs Verfahren.

Derartige Schaltwalzen dienen im Allgemeinen dazu, eine Drehbewegung einer Welle, die durch einen Benutzer als Schaltbewegung initiiert wurde, in eine lineare Bewegung von Schaltgabeln oder dergleichen umzusetzen, wobei die Schaltgabeln selektiv in axialer Richtung der Schaltwalze in Abhängigkeit der Winkelstellung der Schaltwalze verschoben werden. Für diesen Zweck weisen die Schaltwalzen Kurvenbahnen auf, welche sich in Umfangsrichtung der Schaltwalze erstrecken und in denen bzw. von denen Mitnehmer der Schaltgabeln formschlüssig geführt werden. Die Schaltwalzen weisen oftmals spanabhebende Führungsnuten auf, die die Kurvenbahnen bilden. Nachdem die spanabhebende Fertigung der Schaltwalzen mit hohen Kosten verbunden ist, steht das Bedürfnis, andere Konzepte für Schaltwalzen zu erarbeiten, die in der Fertigung kostengünstiger herstellbar sind.

Bereits die Auslegeschrift DE 1 202 665 beschäftigt sich mit diesem Problem und schlägt als Lösung eine Schaltwalze vor, welche aus einem zu einer durch eingeschweißte Scheiben oder dergleichen gehaltenen Trommel eingerollten, zur Kulissenbildung geschlitztem Blechstanzteil besteht.

FR 2 796 696 A offenbart eine Schaltwelle mit einem spanend hergestellten Zylinderbauteil als Schaltwalze, das eine Rampe bzw. eine Nut zur Führung einer Schaltbetätigung aufweist. Das Zylinderbauteil ist zeiteilig aufgebaut, wobei die Teile mittels eines Einsteckteils so verbunden sind, dass zwischen ihnen eine Längsnut gebildet ist. Dieses Zylinderbauteil eignet sich ebenso wie das Zylinderbauteil mit ähnlicher Funktion aus DE 950 433 A1 nicht für eine massentechnische Fertigung in Leichtbauweise.

Ein zweiteiliges Zylinderbauteil in Leichtbauweise ist in DE 199 24 335 A1 offenbart. Es dient zur Realisierung von speziellen Schaltungseinrichtungen, bei denen in Abkehr von üblichen Stellvorrichtungen mit separaten Kurvenbahnen für jede Schiebemuffe entweder mehrere Stellvorrichtungen in einer Kurvenbahn geführt sind bzw. die Seitenflächen zueinander nicht starr gekoppelt, sondern verschieblich sind, um Gänge zu überspringen.

Einen anderen Lösungsweg beschreitet die Offenlegungsschrift DE 197 27 569 A1, welche eine Schaltwalze mit einer Kurvenbahn vorschlägt, wobei auf der Mantelfläche der Schaltwalze zur Bildung der Kurvenbahn zumindest eine radial nach außen gerichtete Wandung vorgesehen ist. Als Wandungen werden beispielweise quadratische oder rechteckförmig gestaltete Endlosprofile verwendet, die entsprechend abgelängt und wellenförmig profiliert auf der Mantelfläche befestigt werden. Alternativ hierzu wird ein U-förmiges Profil erwähnt, welches wellenähnlich auf der Mantelfläche der Schaltwalze angeordnet ist.

Ferner ist aus der Offenlegungsschrift DE 197 27 569 A1, welche alle Merkmale des Oberbegriffs des Anspruchs 1 offenbart, eine aus einem gerollten Blech hergestellte Schaltwalze bekannt, die nicht auf einer separaten Schaltwelle angeordnet ist. Mit ihren Deckeln, über die sie gelagert wird und den separat eingebrachten Kurvenbahnen ist sie ein relativ komplexes Bauteil.

Die Druckschrift DE 195 28 460 A1 beschäftigt sich in weiten Teilen mit Schaltwalzen aus Kunststoff. Die in den Figuren 16 ff. dargestellte Schaltwalze weist jedoch einen Grundkörper mit Rippen auf, wobei der Grundkörper als Stahlachse oder Rohr realisiert ist und die Rippen als durch Ziehen oder Prägen hergestellte Blechscheiben ausgebildet und auf dem Grundkörper aufgeschweißt sind.

EP 1 225 375 A1 zeigt eine Schaltwalze, bei der die Schaltwalze durch auf einer Welle angeordnete Hohlzylinder gebildet ist, die Führungsbahnen für Schaltelemente aufweisen. Die Hohlzylinder sind über separate Flansche auf der Welle befestigt.

Der Erfindung liegt die Aufgabe zu Grunde, eine Schaltwalze vorzuschlagen, welche einfach und kostengünstig herstellbar ist und zudem bei möglichst kleinem Bauramen hohe Kräfte aufnehmen kann ohne zu verkippen.

Diese Aufgabe wird gelöst durch eine Schaltwalze mit den Merkmalen des Anspruchs 1. Vorteilhafte oder bevorzugte Ausführungsformen der Erfindung ergeben sich aus den abhängigen Ansprüchen, der nachfolgenden Beschreibung sowie den beigefügten Figuren.

Die erfindungsgemäße Schaltwalze ist geeignet und/oder ausgebildet für eine Schaltvorrichtung von einem Zahnräderwechselgetriebe für Kraftfahrzeuge. Sie dient insbesondere dazu, eine Schaltbewegung, welche als Dreh- oder Schwenkbewegung auf die Schaltwalze einwirkt in einen linearen und/oder axialen Versatz von Schaltelementen, zum Beispiel Schaltgabeln, umzusetzen. Hierzu weist die Schaltwalze einen Tragkörper auf, welcher in axialer Erstreckung einen zylindrisch ausgebildeten Walzenabschnitt zeigt. Der Grundkörper der Schaltwalze kann entweder einstückig ausgebildet sein, wobei der Tragkörper und der Walzenabschnitt einen integralen Teil der Schaltwalze bildet, bevorzugt ist jedoch, dass die Schaltwalze mehrteilig ausgebildet ist und der Tragkörper als separates Bauteil realisiert ist.

Auf dem Walzenabschnitt ist mindestens ein Führungsrippenaufsatz aufgesetzt und mit diesem fest, insbesondere drehfest und verschiebefest, verbunden. Der Führungsrippenaufsatz umfasst eine Führungsrippe, wobei durch die Führungsrippe in Umfangsrichtung der Schaltwalze eine Kurvenbahn gebildet wird, welche zur insbesondere formschlüssigen Führung eines Mitnehmers eines Schaltelements ausgebildet ist. Die Kurvenbahn ist vorzugsweise als eine zumindest abschnittsweise umlaufende und/oder durchgängige Bahn ausgebildet, wobei Abschnitte der Kurvenbahn in axialer Richtung zueinander versetzt und/oder ineinander übergehend ausgebildet sind.

Erfindungsgemäß ist vorgesehen, dass der Führungsrippenaufsatz einen axial auskragenden, beispielsweise vorstehenden Befestigungsvorsprung aufweist, welcher insbesondere zur Versteifung und/oder als Verkippungsschutz und/oder zur Fixierung des Führungsrippenaufsatzes ausgebildet ist. Hierzu umgreift der Befestigungsvorsprung die Schaltwalze, insbesondere den Walzenabschnitt, zumindest abschnittsweise formschlüssig. Dadurch, dass der Befestigungsvorsprung in axialer Richtung seitlich auskragend angeordnet ist, bildet er ein freies Ende bzw. einen freien Endabschnitt des Führungsrippenaufsatzes in axialer Richtung. Prinzipiell ist es im Rahmen der Erfindung möglich, dass beidseitig zu der Führungsrippe jeweils ein Befestigungsvorsprung angeordnet ist. In Hinblick auf eine kostengünstige Fertigung ist es jedoch bevorzugt, wenn der Befestigungsvorsprung nur auf einer Seite der Führungsrippe angeordnet ist. Auch ist es möglich, dass der Tragkörper und/oder der Führungsrippenaufsatz aus Kunststoff ausgebildet ist, bevorzugt ist jedoch ein metallischer Werkstoff als Material eingesetzt.

Der Erfindung liegt die Überlegung zu Grunde, dass durch den axial auskragenden Befestigungsvorsprung zum einen die Steifigkeit des Führungsrippenaufsatzes deutlich verbessert werden kann, so dass dieser bei gleicher Materialdicke höhere Kräfte aufnehmen kann. Zum zweiten wird eine Verkippung der Führungsrippe gegenüber einer Ebene senkrecht zur axialen Erstreckung der Schaltwalze durch das formschlüssige Umgreifen des Befestigungsvorsprungs nahezu ausgeschlossen. Als weiterer Vorteil ergibt sich, dass die Befestigung des Führungsrippenaufsatzes vereinfacht ist, da sowohl die Führungsrippe als auch der Befestigungsvorsprung für diesen Zweck nutzbar ist. Insbesondere, wenn eine Befestigung über den Befestigungsvorsprung erfolgt, ergibt sich der Vorteil, dass auftretende Kräfte oder Werkstückerwärmungen nicht oder nur vermindert auf die Führungsrippe wirken und diese folglich beschädigungsfrei, insbesondere verzugsfrei eingebaut werden kann. Mit diesen Vorteilen wird die Fertigung deutlich vereinfacht und damit kostengünstiger.

Bei einer bevorzugten Ausführungsform ist der Befestigungsvorsprung als ein umlaufender Befestigungskragen ausgebildet, wobei durch die Axialsymmetrie des Befestigungskragen eine gleichmäßige Abstützung des Führungsrippenaufsatzes über den gesamten Umfang erreicht wird. Insbesondere ist die Erstreckung des Befestigungskragens in axialer Richtung überall gleich ausgebildet.

Bei einer besonders kostengünstigen Ausführungsvariante wird der Befestigungsvorsprung umformtechnisch, insbesondere durch Kaltumformung, im Speziellen durch Ziehen geformt. Die Umformtechnik bietet hier den Vorteil, dass auch größere Stückzahlen in hoher reproduzierbarer Qualität bei niedrigen Fertigungskosten herstellbar sind. Besonders bevorzugt wird der Befestigungsvorsprung bzw. der Befestigungskragen durch Kragenziehen geformt, welches insbesondere gemäß der DIN 8580 festgelegt ist.

Bei einer vorteilhaften Weiterbildung der Erfindung ist die Führungsrippe als Kreisscheibe bzw. kreisscheibenähnlicher Körper mit in axialer Richtung ausgebildeter Konturierung, die die Kurvenbahn definiert, ausgebildet. Ein über die Führungsrippe geführter Mitnehmer fährt somit bei einer Drehbewegung der Schaltwalze die in axialer Richtung weisende Seitenfläche der Kreisscheibe ab, wobei durch die wellenähnliche oder -förmige Konturierung der Mitnehmer in axialer Richtung verschoben wird. Die Konturierung ist bevorzugt durch eine Materialdickenänderung der Kreisscheibe und/oder eine Umformung der Kreisscheibe gebildet. Optional ist vorgesehen, dass die Führungsrippe in der Umfangsverteilung Bereiche unterschiedliche Materialstärke aufweist, wobei die Bereiche in Abhängigkeit des zu erwartenden Kraftverlaufs angeordnet oder gewählt sind. So ist die Führungsrippe beispielsweise in Bereichen, die zu einer starken Verschiebung des Mitnehmers in axialer Richtung führen, verstärkt, wohingegen in Bereichen, in denen die Kurvenbahn in einer Ebene senkrecht zur axialen Erstreckung der Schaltwalze verläuft, vergleichsweise dünn ausgebildet.

Es ist dabei bevorzugt, dass die Führungsrippe umformtechnisch, insbesondere durch Prägen geformt ist. Bei einer Weiterbildung der Erfindung ist die Führungsrippe durch eine Verfahrensfolge von Lochen bzw. Einschneiden des Ausgangsblechs und Biegen des Ausgangsblechs in die konturierte Endform gebildet.

Bei einer praktischen Umsetzung sind Führungsrippe und Befestigungsvorsprung einstückig, insbesondere als einstückiges Umformteil ausgebildet und sind vorzugsweise aus einem ebenen Blechteil mittels einer Verfahrensfolge gefertigt, die einen Ziehvorgang, einen Präge- bzw. Biegevorgang und gegebenenfalls einen Loch- bzw. Einschneidvorgang umfasst.

Zur festen Verbindung von Führungsrippenaufsatz und Walzenabschnitt sind eine Vielzahl von Möglichkeiten umsetzbar. So kann die Verbindung beispielsweise stoffschlüssig, insbesondere über Schweißen oder Laserstrahlschweißen, formschlüssig, über Verstiften, und/oder kraftschlüssig, zum Beispiel über Verpressen, erfolgen.

Prinzipiell ist es möglich, dass der Mitnehmer eine U-förmige Kontur aufweist, in die die Führungsrippe zumindest abschnittsweise eingeführt ist und diese entlang der Kurvenbahn führt. Es ist jedoch bevorzugt, dass jeweils zwei Führungsrippenaufsätze eine gemeinsame Führungsnut als Kurvenbahn bilden. Der Mitnehmer ist dann als Glied ausgebildet, welches die Führungsnut entlang der Kurvenbahn abfährt und in Abhängigkeit von der Position und dem Verlauf der Kurvenbahn durch die Seitenfläche der einen und/oder der anderen Führungsrippe geführt wird.

Die Befestigungsvorsprünge der Führungsrippenaufsätze sind vorzugsweise zumindest paarweise jeweils in die gleiche axiale Richtung gerichtet. Bei abgewandelten Ausführungsformen kann vorgesehen sein, dass die Befestigungsvorsprünge als formschlüssige Abstandshalter verwendet werden. Insbesondere bei dieser Ausführungsform sind die Befestigungsvorsprünge optional zueinander gewandt und berührend aneinanderliegend angeordnet.

Für eine praktische Ausführung ist es zweckmäßig, dass die Schaltwalze eine Mehrzahl von Führungsrippen aufweist, die mehrere Kurvenbahnen und/oder Führungsnuten bilden. Dabei ist eine praktischen Ausführung bevorzugt, bei der sechs Führungsrippenaufsätze vorgesehen sind, die drei Führungsnuten bilden.

Bei einer vorteilhaften Ausführungsform, die die Montagefreundlichkeit der Baugruppe unterstützt, weisen die Führungsrippenaufsätze Positionierungseinrichtungen auf, welche die Position der Führungsrippenaufsätze in Umfangsrichtung definiert. Prinzipiell können diese Positionierungseinrichtungen zum Beispiel als Durchgangslöcher vorgesehen sein, bevorzugt ist jedoch, dass die Positionierungseinrichtung als radialaußenseitige Nuten, Kerben oder Abflachungen auf den Führungsrippen ausgebildet sind. Diese Positionierungseinrichtungen können bei der Montage durch ein simples Positionierungswerkzeug zueinander ausgerichtet werden, so dass eine korrekte Position der Führungsrippenaufsätze in Umfangsrichtung gewährleistet ist.

Bei einer Weiterbildung der Erfindung ist der Walzenabschnitt aus einem Rohr, einem Rundmaterial, insbesondere Vollmaterial oder einer Hülse mit einem konstanten Querschnittsprofil gebildet. Hierbei ist optional vorgesehen, dass der Walzenabschnitt an einem oder beiden seiner freien Enden eine Aufweitung oder eine Verjüngung aufweist, welche zur Zentrierung mit weiteren Komponenten der Schaltwalze ausgebildet ist.

Weitere Merkmale, Vorteile und Wirkungen der Erfindung ergeben sich aus der nachfolgenden Beschreibung sowie den beigefügten Figuren eines bevorzugten Ausführungsbeispiels der Erfindung. Dabei zeigen:
- Figur 1: eine schematische Schnittansicht einer Schaltwalze als ein ers- tes Ausführungsbeispiel der Erfindung;
- Figur 2: eine schematische dreidimensionale Darstellung des Tragkörpers in der Figur 1;
- Figuren 3, 4: eine schematische dreidimensionale bzw. geschnittene Darstel- lung eines Führungsrippenaufsatzes in der Figur 1;
- Figuren 5, 6, 7: eine schematische dreidimensionale Schrägansicht, Sei- tenansicht bzw. geschnittene Ansicht zweier Führungsrippen- aufsätze in Figur 1, welche gemeinsam eine dazwischenlie- gende Kurvenbahn bilden.

Einander entsprechende Teile sind in den Figuren jeweils mit den gleichen Bezugszeichen versehen.

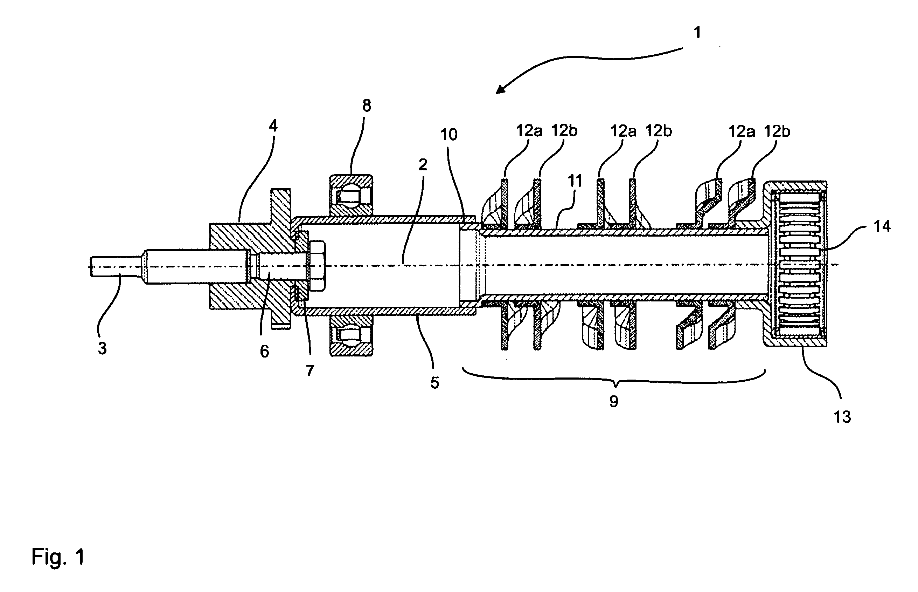

Die Figur 1 zeigt einen schematischen Längsschnitt parallel zur axialen Längserstreckung einer Schaltwalze 1, welche zur Umsetzung von einer Eigendreh- oder -schwenkbewegung um die Mittenachse 2 in eine axiale Verschiebung von einem oder mehreren Mitnehmern (nicht gezeigt) in axialer Richtung der Schaltwalze 1 ausgebildet ist. Die Schaltwalze ist z. B. zum Schalten der einzelnen Gänge bei einem automatisierten Schaltgetriebe ausgelegt.

Entlang der Mittenachse 2 der Schaltwalze 1 von links nach rechts betrachtet umfasst die Schaltwalze 1 einen Wellenfortsatz 3, welcher von einer Zahnradanordnung 4, die zur Übertragung von Schaltbewegungen ausgebildet ist, mittig aufgenommen ist. Nachfolgend ist eine Buchse 5 angeordnet, deren der Zahnradanordnung 4 zugewandte Stirnseite eine Öffnung aufweist, durch die eine Schraube 6 geführt ist, die in den Wellenfortsatz 3 eingreift und diesen fixiert. Um die Schraube 6 gegen ein Herausfallen aus der Buchse 5 zu sichern, ist eine Scheibe 7 vorgesehen, die im Durchmesser größer als die stirnseitige Öffnung der Buchse 5 ausgebildet ist und zwischen Schraubenkopf der Schraube 6 und Stirnseite der Buchse 5 innenliegend angeordnet ist. Durch die Schraube 6 und den Wellenfortsatz 3 wird auch die Zahnradanordnung 4 fixiert und konzentrisch und/oder koaxial zu der Mittenachse 2 ausgerichtet. Die Buchse 5 ist über ein erstes Wälzlager 8, welches als Kugellager ausgebildet ist, gegenüber einer nicht dargestellten Auflage abgestützt.

An die Buchse 5 schließt sich ein als Hülse ausgebildeter Tragkörper 9 an. Das der Buchse 5 zugewandte, freie Ende des Tragkörpers 9 zeigt eine Aufweitung 10, deren Außendurchmesser an den Innendurchmesser der Buchse 5 so angepasst ist, dass die Buchse 5 den Endabschnitt bzw. die Aufweitung 10 des Tragkörpers 9 formschlüssig und zentrierend umgreift. Die Aufweitung 10 ist beispielsweise umformtechnisch eingebracht.

Der Tragkörper 9 weist nach der Aufweitung 10 einen zylinderförmigen Walzenabschnitt 11 auf, auf dem eine Mehrzahl von jeweils paarweise angeordneten Führungsrippenaufsätzen 12 a, b befestigt ist. Im Bereich des Walzenabschnitts 11 weist der Tragkörper 9 über seine gesamte Länge eine konstante Querschnittsfläche bzw. -flächenform senkrecht zur axialen Erstreckung der Schaltwalze 1 auf. An dem der Aufweitung 10 gegenüberliegenden, anderen freien Ende des Tragkörpers 9 wird dieser von einem Adapter eines Abschlusstopfes 13 umgriffen, wobei der Innendurchmesser des Adapters an den Außendurchmesser des Tragkörpers 9 im Walzenabschnitt 11 angepasst ist, so dass dieser formschlüssig und/oder zentrierend gehalten wird. In dem Abschlusstopf 13 ist ein zweites Wälzlager 14 angeordnet, das zur Stabilisierung der Schaltwalze 1 ausgebildet und angeordnet ist.

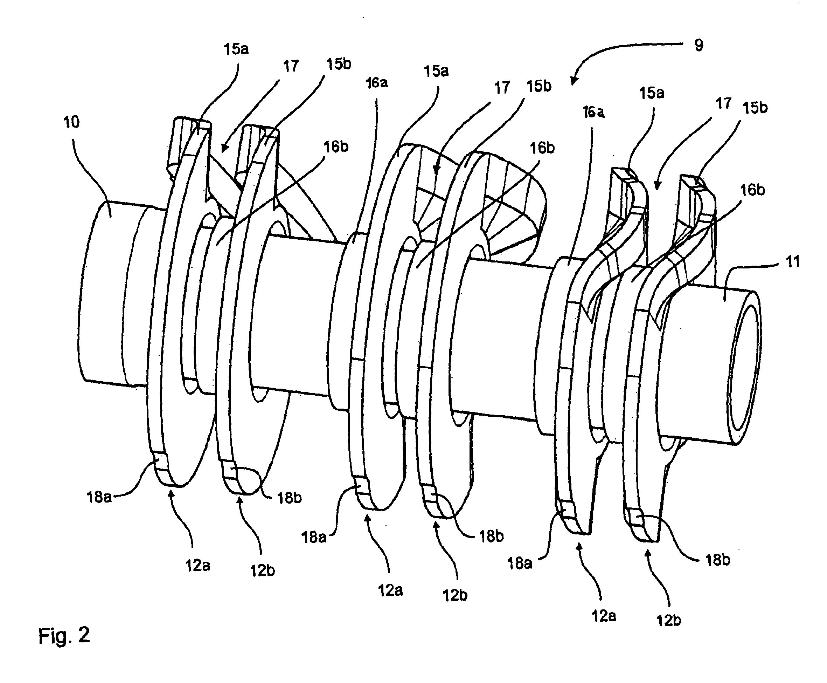

Die Figur 2 zeigt den Tragkörper 9 mit den darauf angeordneten Führungsrippenaufsätzen 12 a, b in einer schematischen dreidimensionalen Ansicht. Jeder Führungsrippenaufsatz 12 a, b besteht aus einer Führungsrippe 15 a bzw. b und einem Befestigungskragen 16 a bzw. b, welcher jeweils einstückig mit der zugehörigen Führungsrippe 15 a bzw. b verbunden ist. Der Führungsrippenaufsatz 12 a, b ist als ein Umformteil z.B. aus einem ebenen Blechausschnitt ausgebildet, wobei in einem ersten Verfahrensschritt der Befestigungskragen mittels Kragenziehen geformt wird. In einem weiteren Schritt werden die Führungsrippen 15 a bzw. b gegebenenfalls gelocht und dann gebogen und/oder geprägt. Bei alternativen Ausführungsformen mögen die Verfahrensschritte auch in einer anderen Reihenfolge durchgeführt werden. Auf diese Weise werden die Führungsrippen 15 a, b so geformt, dass zwischen jeweils zwei zueinander gehörigen Führungsrippen 15 a, b eine Führungsnut 17 gebildet wird, welche einen Mitnehmer, der ein Schaltelement, zum Beispiel eine Schaltgabel, in axialer Richtung führt, aufnimmt und bei einer Drehbewegung der Schaltwalze 1 und somit des Tragkörpers 9 in axialer Richtung verschiebt. Die Führungsnut 17 ist als Kulissenführung für den oder die Mitnehmer realisiert.

Hervorzuheben ist, dass bei diesem Ausführungsbeispiel alle Befestigungskrägen 16 a, b relativ zu den Führungsrippen 15 a, b gleich orientiert, und zwar in Richtung der Aufweitung 10 sind. Diese Ausbildungsform hat den Vorteil, dass für jede Führungsnut 17 zwei identisch oder zumindest ähnlich ausgebildete Führungsrippenaufsätze 12 a, b verwendbar sind. Bei alternativen Ausführungsformen sind die Befestigungskrägen 16 a, b von Führungsrippenaufsätzen 12 a, b einer Führungsnut 17 zueinander orientiert, so dass mit diesen der Abstand zwischen den Führungsrippen 15 a, b definiert ist. Alternativ hierzu kann der Abstand zwischen Führungsrippen 15 a, b auch durch einen einzigen zwischen den Führungsrippen 15 a, b liegenden Befestigungskragen 16 a oder alternativ 16 b festgelegt sein. Ergänzend wird darauf hingewiesen, dass die durch die sechs Führungsrippenaufsätze 12a, b gebildeten drei Führungsnuten 17 jeweils unterschiedlich verlaufend ausgebildet sind.

Zur Erleichterung der Montage weist jede Führungsrippe 15 a, b eine Justagekerbe 18 a, b auf, welche bei richtig eingebauten Führungsrippenaufsätzen 12 a, b in axialer Richtung deckungsgleich angeordnet sind. Statt Justagekerben 18 a, b können auch Justagenasen oder andere Justagehilfen Verwendung finden.

Die Befestigung der Befestigungskrägen 16 a, b auf dem Tragkörper 9 erfolgt beispielsweise durch Schweißen, Verstiften, Aufpressen oder anderen bekannten Verbindungstechniken.

Obwohl alle Führungsrippen 15 a, b in der Figur 2 mit der gleichen Blechstärke dargestellt und ausgebildet sind, ist es möglich bei abgewandelten Ausführungsformen unterschiedliche Blechstärken für die Führungsrippen 15 a, b oder für Teilbereiche der Führungsrippen 15 a, b zu verwenden, wobei die unterschiedlichen Blechstärken an den zu erwartenden Kraftverlauf angepasst sind und so eine optimale Ausnutzung des Bauraumes und eine optimale Festigkeit der Baugruppe Schaltwalze 1 erzielen.

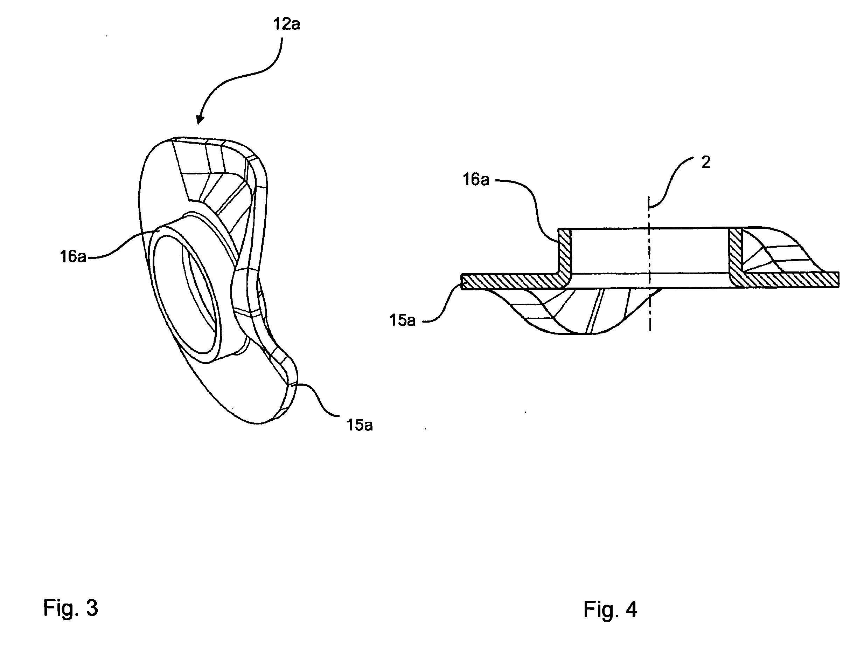

Die Figuren 3 und 4 zeigen den Führungsrippenaufsatz 12 a in den Figuren 1 und 2, in einer schematischen, dreidimensionalen Darstellung bzw. in einer Schnittdarstellung in einer Schnittebene parallel zu der Mittenachse 2, wobei der Führungsrippenaufsatz 12 a genau eine Führungsrippe 15 a und genau einen Befestigungskragen 16a aufweist. Aus den Darstellungen ist abzuleiten, dass der Führungsrippenaufsatz 12a durch eine Abfolge von Umformprozessen erfolgt ist, wobei der Befestigungskragen 16a durch Kragenziehen und der konturierte Abschnitt der Führungsrippe 15 a durch gegebenenfalls Lochen und Biegen oder Prägen gebildet ist. Der umgeformte Bereich der Führungsrippe 15 a erstreckt sich ca. in einem Winkelbereich von 150° um die Mittenachse 2. Wie sich insbesondere aus der Figur 4 entnehmen lässt, ist die Blechdicke der Führungsrippe 15 a im nicht umgeformten Bereich in etwa gleich der Blechdicke des Befestigungskragens 16 a. Der Befestigungskragen 16 a ist dabei als topfförmiger Fortsatz ausgebildet, welcher eine Abschlusskante aufweist, die senkrecht zur Mittenachse 2 angeordnet ist.

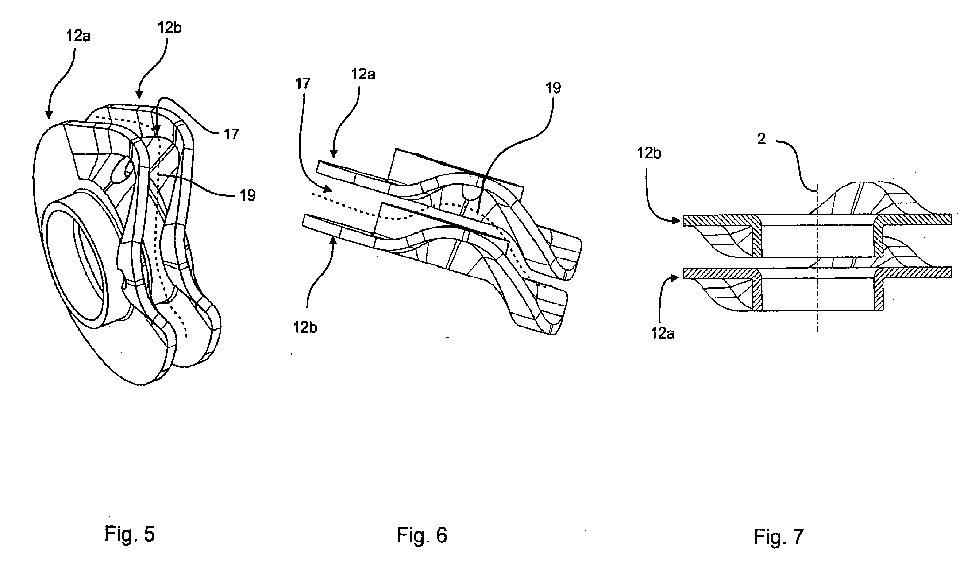

Die Figuren 5, 6 und 7 zeigen die Führungsrippenaufsätze 12 a, b in den Figuren 1 und 2 in einer schematischen dreidimensionalen Darstellung in einer Schrägansicht, Seitenansicht bzw. einer Schnittansicht, wobei aus den Darstellungen der Verlauf der Führungsnut 17 zu entnehmen ist. Zur graphischen Verdeutlichung ist die mögliche Kurvenbahn der Mitnehmer mit gestrichelten Linien 19 angedeutet.

### Bezugszeichenliste

- 1: Schaltwalze
- 2: Mittenachse
- 3: Wellenfortsatz
- 4: Zahnradanordnung
- 5: Buchse
- 6: Schraube
- 7: Scheibe
- 7: erstes Wälzlager
- 9: Tragkörper
- 10: Aufweitung
- 11: Walzenabschnitt
- 12 a, b: Führungsrippenaufsatz
- 13: Abschlusstopf
- 14: zweites Wälzlager
- 15 a, b: Führungsrippe
- 16 a, b: Befestigungskragen
- 17: Führungsnut
- 18 a, b: Justagekerbe
- 19: Kurvenbahn

## Patentansprüche

1. Schaltwalze (1) für eine Schaltvorrichtung eines Kraftfahrzeugzahnräderwechselgetriebes mit
- einem Tragkörper (9), welcher in axialer Erstreckung einen zylindrisch ausgebildeten Walzenabschnitt (11) aufweist,
- und mindestens einem Führungsrippenaufsatz (12 a, b), der auf dem Walzenabschnitt (11) aufgesetzt und mit diesem fest verbunden ist,
- wobei der Führungsrippenaufsatz (12 a, b) eine Führungsrippe (15 a, b) aufweist, welche in Umfangsrichtung der Schaltwalze (1) eine Kurvenbahn (17) bildet, die zur Führung eines Mitnehmers eines Schaltelements ausgebildet ist,
- wobei der Führungsrippenaufsatz (12 a, b) einen axial auskragenden Befestigungsvorsprung (16 a, b) aufweist, welcher den Walzenabschnitt (11) in Umfangsrichtung zumindest abschnittsweise formschlüssig umgreift und wobei der Befestigungsvorsprung (16 a, b) mit der Führungsrippe (15 a, b) ein einstückiges Umformbauteil bildet,
**dadurch gekennzeichnet, dass** der Befestigungsvorsprung (16 a, b) als ein axialsymmetrischer Befestigungskragen ausgebildet ist.

2. Schaltwalze (1) nach Anspruch 1, **dadurch gekennzeichnet, dass** die Führungsrippe (15 a, b) als Kreisscheibe mit in axialer Richtung ausgebildeter Konturierung, die die Kurvenbahn (17) definiert, ausgebildet ist.

3. Schaltwalze (1) nach einem der vorhergehenden Ansprüche, **dadurch gekennzeichnet, dass** die Führungsrippe (15 a, b) in der Umfangsverteilung Bereiche unterschiedlicher Materialstärke aufweist, wobei die Bereiche in Abhängigkeit des Kraftverlaufes angeordnet oder gewählt sind.

4. Schaltwalze (1) nach einem der vorhergehenden Ansprüche, **dadurch gekennzeichnet, dass** der Führungsrippenaufsatz (12 a, b) stoffschlüssig, oder kraftschlüssig auf dem Walzenabschnitt (11) festgelegt ist.

5. Schaltwalze (1) nach einem der vorhergehenden Ansprüche, **dadurch gekennzeichnet, dass** jeweils zwei Führungsrippenaufsätze (12 a, b) eine gemeinsame Führungsnut (17) als Kurvenbahn bilden.

6. Schaltwalze (1) nach einem der vorhergehenden Ansprüche, **gekennzeichnet, durch** eine Mehrzahl von Führungsrippenaufsätzen (12 a, b), die mehrere Kurvenbahnen und/oder Führungsnuten (17) bilden.

7. Schaltwalze (1) nach Anspruch 11, **dadurch gekennzeichnet, dass** die Führungsrippenaufsätze (12 a, b) Positionierungseinrichtungen (18 a, b) aufweisen, welche die Position der Führungsrippenaufsätze (12 a, b) in Umfangsrichtung definieren.

8. Schaltwalze (1) nach Anspruch 12, **dadurch gekennzeichnet, dass** die Positionierungseinrichtungen als radial außenseitige Nuten, Kerben oder Abflachungen (18 a, b) ausgebildet sind.

9. Schaltwalze (1) nach einem der vorhergehenden Ansprüche, **dadurch gekennzeichnet, dass** der Walzenabschnitt (1) aus einem Rohr, einem Rundmaterial oder einer Hülse mit einem konstanten Querschnittsprofil gebildet ist.

10. Schaltwalze (1) nach einem der vorhergehenden Ansprüche, **dadurch gekennzeichnet, dass** der Befestigungsvorsprung (16 a, b) eines Führungsrippenaufsatzes (12a, b) als formschlüssiger Abstandshalter von einem weiteren Führungsrippenaufsatz (12 a, b) ausgebildet ist.

11. Verfahren zur Herstellung einer Schaltwalze (1) nach einem der vorhergehenden Ansprüche, **dadurch gekennzeichnet, dass** der Führungsrippenaufsatz (12 a, b) aus einem ebenem Blechteil durch ein Verfahren hergestellt ist, das ein Ziehen, Prägen oder Biegen umfasst.

12. Verfahren nach Anspruch 10, **dadurch gekennzeichnet, dass** der Befestigungsvorsprung (16 a, b) durch Ziehen geformt ist.

13. Verfahren nach Anspruch 10 oder 11, **dadurch gekennzeichnet, dass** die Führungsrippe (15 a, b) durch Prägen geformt ist.

## Claims

1. Shifting drum (1) for a shifting device of a motor vehicle variable-speed gearbox, having
- a support body (9) which, in axial extent, has a drum section (11) of cylindrical design,
- and at least one guide rib attachment (12 a, b) which is seated on and fixedly connected to the drum section (11),
- with the guide rib attachment (12 a, b) having a guide rib (15 a, b) which forms a cam track (17) in the circumferential direction of the shifting drum (1), which cam track (17) is designed to guide a driver of a shifting element,
- with the guide rib attachment (12 a, b) having an axially projecting fastening projection (16 a, b) which engages in a positively locking fashion around the drum section (11) in the circumferential direction at least in sections,
and with the fastening projection (16 a, b) forming a single-piece formed component with the guide rib (15 a, b),
**characterized in that** the fastening projection (16 a, b) is formed as an axially symmetrical fastening collar.

2. Shifting drum (1) according to Claim 1, **characterized in that** the guide rib (15 a, b) is formed as a round disc with contouring which is formed in the axial direction and defines the cam track (17).

3. Shifting drum (1) according to one of the preceding claims, **characterized in that** the guide rib (15 a, b) has, in the circumferential distribution, regions of different material thickness, with the regions being arranged or selected as a function of the force profile.

4. Shifting drum (1) according to one of the preceding claims, **characterized in that** the guide rib attachment (12 a, b) is fixed to the drum section (11) in a cohesive or non-positively locking fashion.

5. Shifting drum (1) according to one of the preceding claims, **characterized in that** in each case two guide rib attachments (12 a, b) form a common guide groove (17) as a cam track.

6. Shifting drum (1) according to one of the preceding claims, **characterized by** a multiplicity of guide rib attachments (12 a, b) which form a plurality of cam tracks and/or guide grooves (17).

7. Shifting drum (1) according to Claim 11, **characterized in that** the guide rib attachments (12 a, b) have positioning devices (18 a, b) which define the position of the guide rib attachments (12 a, b) in the circumferential direction.

8. Shifting drum (1) according to Claim 12, **characterized in that** the positioning devices are formed as grooves, notches or flattened portions (18 a, b) radially on the outside.

9. Shifting drum (1) according to one of the preceding claims, **characterized in that** the drum section (11) is formed from a tube, round stock or a sleeve with a constant cross-sectional profile.

10. Shifting drum (1) according to one of the preceding claims, **characterized in that** the fastening projection (16 a, b) of one guide rib attachment (12 a, b) is formed as a positively locking spacer of a further guide rib attachment (12 a, b).

11. Method for producing a shifting drum (1) according to one of the preceding claims, **characterized in that** the guide rib attachment (12 a, b) is produced from a planar sheet-metal part by means of a process encompassing drawing, embossing or bending.

12. Method according to Claim 10, **characterized in that** the fastening projection (16 a, b) is shaped by drawing.

13. Method according to Claim 10 or 11, **characterized in that** the guide rib (15 a, b) is shaped by embossing.

## Revendications

1. Barillet de sélection (1) pour un dispositif de sélection d'une transmission à changement de vitesse à roue dentée pour véhicule automobile, comprenant
- un corps porteur (9) qui présente, dans son étendue axiale, une portion de barillet (11) de forme cylindrique,
- et au moins un couronnement à nervure de guidage (12a, b) qui est posé sur la portion de barillet (11) et qui est connecté fixement à celle-ci,
- le couronnement à nervure de guidage (12a, b) présentant une nervure de guidage (15a, b) qui forme une piste de came (17) dans la direction périphérique du barillet de sélection (1), qui est réalisée pour guider un dispositif d'entraînement d'un élément de sélection,
- le couronnement à nervure de guidage (12a, b) présentant une saillie de fixation saillant axialement (16a, b) qui vient en prise au moins en partie autour de la portion de barillet (11) dans la direction périphérique,
la saillie de fixation (16a, b) formant avec la nervure de guidage (15a, b) un composant façonné d'une seule pièce,
**caractérisé en ce que** la saillie de fixation (16a, b) est réalisée sous forme de collet de fixation à symétrie axiale.

2. Barillet de sélection (1) selon la revendication 1, **caractérisé en ce que** la nervure de guidage (15a, b) est réalisée sous forme de rondelle circulaire avec un contour réalisé dans la direction axiale, qui définit la piste de came (17).

3. Barillet de sélection (1) selon l'une quelconque des revendications précédentes, **caractérisé en ce que** la nervure de guidage (15a, b) présente, dans la distribution périphérique, des zones de différentes épaisseurs de matériau, les zones étant disposées ou choisies en fonction de la courbe de forces.

4. Barillet de sélection (1) selon l'une quelconque des revendications précédentes, **caractérisé en ce que** le couronnement à nervure de guidage (12a, b) est fixé par engagement par liaison de matière, ou par force, sur la portion de barillet (11).

5. Barillet de sélection (1) selon l'une quelconque des revendications précédentes, **caractérisé en ce que** deux couronnements à nervure de guidage (12a, b) forment à chaque fois une rainure de guidage commune (17) en tant que piste de came.

6. Barillet de sélection (1) selon l'une quelconque des revendications précédentes, **caractérisé par** une pluralité de couronnements à nervure de guidage (12a, b), qui forment plusieurs pistes de came et/ou rainures de guidage (17).

7. Barillet de sélection (1) selon la revendication 11, **caractérisé en ce que** les couronnements à nervure de guidage (12a, b) présentent des dispositifs de positionnement (18a, b) qui définissent la position des couronnements à nervure de guidage (12a, b) dans la direction périphérique.

8. Barillet de sélection (1) selon la revendication 12, **caractérisé en ce que** les dispositifs de positionnement sont réalisés sous forme de rainures, encoches ou méplats (18a, b) du côté radialement extérieur.

9. Barillet de sélection (1) selon l'une quelconque des revendications précédentes, **caractérisé en ce que** la portion de barillet (11) se compose d'un tube, d'un matériau rond ou d'un manchon formé avec un profil en section transversale constant.

10. Barillet de sélection (1) selon l'une quelconque des revendications précédentes, **caractérisé en ce que** la saillie de fixation (16a, b) d'un couronnement à nervure de guidage (12a, b) est réalisée sous forme de dispositif d'espacement à engagement positif d'un autre couronnement à nervure de guidage (12a, b).

11. Procédé de fabrication d'un barillet de sélection (1) selon l'une quelconque des revendications précédentes, **caractérisé en ce que** le couronnement à nervure de guidage (12a, b) est fabriqué en une pièce en tôle plane, par un procédé qui inclut un emboutissage, un gaufrage ou un cintrage.

12. Procédé selon la revendication 10, **caractérisé en ce que** la saillie de fixation (16a, b) est formée par emboutissage.

13. Procédé selon la revendication 10 ou 11, **caractérisé en ce que** la nervure de guidage (15a, b) est formée par gaufrage.
